# EUROPÄISCHE PATENTANMELDUNG

(11) **EP 1 178 551 A2**
(43) Veröffentlichungstag der Anmeldung: **06.02.2002**
(21) Anmeldenummer: 01117352.3
(22) Anmeldetag: 18.07.2001
(51) Int. Cl.: H01M 8/04

(54) **Verfahren zur Regelung eines Brennstoffzellensystems**

(30) Priorität: 02.08.2000 DE 10037579
(71) Anmelder: Buderus Heiztechnik GmbH, D-35576 Wetzlar (DE)
(72) Erfinder: Christen, Andreas, 35469 Allendorf (DE); Wieland, Steffen, Dr., 74080 Heilbronn (DE)

(57) **Zusammenfassung**

Die Erfindung betrifft ein Verfahren zur Regelung eines Brennstoffzellensystems, insbesondere bestehend aus mehreren im Verbund zusammengeschalteten Einzelzellen oder Stacks, zum Einsatz als Kraft-Wärme-Kopplungsanlage.

Der Erfindung liegt die Aufgabe zugrunde, ein Brennstoffzellensystem so zu betreiben, dass der optimale Lastpunkt, insbesondere hinsichtlich günstiger Wirkungsgrade sowie maximaler Wärme- und/oder Strombereitstellung für eine spezielle Anwendung, eingehalten wird.

Gekennzeichnet ist das Verfahren zur Regelung eines Brennstoffzellensystems dadurch, dass alleine durch das Zu- oder Abschalten von Einzelzellen oder Stacks oder in Kombination mit der günstigsten Stromdichte im aktuellen Lastpunkt die elektrische und/oder thermische Leistung des Brennstoffzellensystems geregelt wird.

## Beschreibung

Die Erfindung betrifft ein Verfahren zur Regelung eines Brennstoffzellensystems nach dem Oberbegriff des Patentanspruches 1.

Brennstoffzellen wandeln Wasserstoff oder kohlenwasserstoffhaltige Brennstoffe direkt in elektrischen Strom um. Charakteristisch für eine Brennstoffzelle ist dabei, dass hohe elektrische Wirkungsgrade bei niedriger Stromdichte erzielt werden. Dann sind elektrische Leistung und Wärmeleistung allerdings sehr gering. Allgemein gilt, dass bei steigender Stromdichte der elektrische Wirkungsgrad der Brennstoffzelle kontinuierlich schlechter, die erzeugte Wärmemenge und elektrische Energie aber größer wird. Daher wird die größte elektrische Leistung bei einer relativ hohen Stromdichte gemessen. Bei einer weiteren Steigerung der Stromdichte fällt die elektrische Leistung relativ schnell ab und der wärmetechnische Wirkungsgrad steigt stark an. Dieser würde am Lastpunkt mit größtmöglicher Stromdichte, d. h. bei einer Spannung von 0 Volt, sein Maximum erreichen.

Brennstoffzellensysteme, die auch aus mehreren im Verbund zusammengeschalteten Einzelzellen bestehen können und als sogenannte Stacks aufgebaut sind, werden zur Zeit für einen auf die spezielle Anwendung zugeschnittenen Lastpunkt ― den Nennlastpunkt ― ausgelegt. Beispielsweise aufgrund von Energieverbrauchsschwankungen arbeitet die Brennstoffzelle allerdings während des Betriebes auch mit anderen, meist kleineren Stromdichten und daher nicht immer im Nennlastpunkt. Somit stellt der variable, aktuelle Lastpunkt immer einen Kompromiss zwischen Wirkungsgrad und Leistung dar.

Besonders beim Einsatz eines Brennstoffzellensystems als Kraft-Wärme-Kopplungsanlage zur Deckung des Strom- und Wärmebedarfs eines Objektes muss die charakteristische Arbeitsweise einer Brennstoffzelle an den oft stark schwankenden Leistungsbedarf der Verbraucher angepasst werden, um die Wirtschaftlichkeit einer derartigen Anlage zu gewährleisten. Hinzu kommen für die Einspeisung des erzeugten Stromes in das öffentliche Netz noch spezielle Tarife und Zeitbeschränkungen, die ebenfalls den wirtschaftlichen Betrieb eines Brennstoffzellensystems beeinflussen.

Kraft-Wärme-Kopplungsanlagen werden beispielsweise nach dem Wärmebedarf geregelt, wenn die Eigennutzung des erzeugten Stromes oder die Abgabe an das öffentliche Stromnetz sichergestellt ist. Umgekehrt ist auch ein strombedarfsorientierter Betrieb möglich. Dann bildet sie elektrische Leistung die Führungsgröße und die parallel erzeugte Wärme muss abgeführt werden.

Bekannt ist aus der DE 198 27 880 C1 ein Brennstoffzellenverbundsystem mit einer Reihenschaltung einzelner Brennstoffzellen. Mit zusätzlichen oder integrierten Bauelementen können hier einzelne Brennstoffzellen mit einer niederohmigen Parallelschaltung überbrückt werden, um im Fehlerfall, zum Beispiel bei vertauschter Polarität, eine Beschädigung einzelner Brennstoffzellen oder des Gesamtsystems zu vermeiden. Außerdem enthält die DE 199 56 225 A1 eine Brennstoffzellenanordnung mit einem Kennlinienfeldspeicher zur Regelung der Luftmenge. Dafür sind experimentell ermittelte Werte für mögliche Betriebszustände abgelegt.

Der Erfindung liegt die Aufgabe zugrunde, ein Brennstoffzellensystem so zu betreiben, dass der optimale Lastpunkt, insbesondere hinsichtlich günstiger Wirkungsgrade sowie maximaler Wärme- und/oder Strombereitstellung für eine spezielle Anwendung, eingehalten wird.

Erfindungsgemäß wird dies mit den Merkmalen des Patentanspruches 1 gelöst. Vorteilhafte Weiterbildungen sind den Unteransprüchen zu entnehmen.

Das Verfahren zur Regelung eines Brennstoffzellensystems ist dadurch gekennzeichnet, dass alleine durch das Zu- oder Abschalten von Einzelzellen oder Stacks oder in Kombination mit der für die Verbraucher günstigsten Stromdichte im aktuellen Lastpunkt die elektrische und/oder thermische Leistung des Brennstoffzellensystems geregelt wird. Damit wird das Brennstoffzellensystem in Abhängigkeit der Leistungsanforderungen der angeschlossenen elektrischen und thermischen Verbraucher betrieben.

Durch das Zu- oder Abschalten von Einzelzellen oder Stacks werden alle in Betrieb befindlichen Einzelzellen oder Stacks in bzw. möglichst nahe am für die aktuell vorliegende Anforderung der Verbraucher günstigen Lastpunkt betrieben. Wahlweise erfolgt dies in Bezug auf die optimale Ausnutzung der eingesetzten Energie oder auf die Bereitstellung der maximalen elektrischen und/oder thermischen Energie entsprechend der Bedarfsanforderung. Es handelt sich dabei um eine interne Optimierung im Brennstoffzellensystem.

Alternativ oder in Kombination mit der vorstehend beschriebenen Betriebsoptimierung kann als Kriterium für das Zu- oder Abschalten von Einzelzellen oder Stacks die Bedarfsanforderung der angeschlossenen elektrischen oder thermischen Verbraucher herangezogen werden. Alle in Betrieb befindlichen Einzelzellen oder Stacks werden auch hierbei nach der jeweiligen Bedarfsanforderung in bzw. möglichst nahe am günstigsten Lastpunkt betrieben, nur haben die externen Einflüsse, beispielsweise die Messwerte aus einer angeschlossenen Heizungsanlage, hierbei auf das Regelverfahren Vorrang.

Bei einer Regelung des Brennstoffzellensystems nach dem thermischen Verbraucher wird der optimale Lastpunkt für einen maximalen elektrischen Wirkungsgrad verlassen, damit eine entsprechend größere Wärmeleistung zur Verfügung gestellt werden kann. Im Umkehrfall wird der optimale Lastpunkt für einen höchstmöglichen thermischen Wirkungsgrad verlassen, um eine maximale elektrische Leistung zur Verfügung zu stellen, wenn die Regelung des Brennstoffzellensystems nach den Vorgaben des elektrischen Verbrauchers arbeitet. Es entsteht dadurch eine Flexibilität, welche das gesamte Brennstoffzellensystem an die Anforderungen für den Einsatz als Kraft-Wärme-Kopplungsanlage anpasst.

Um bei der Energieabgabe sogenannte Leistungssprünge wie Strom- oder Wärmespitzen zu vermeiden, wird das stufenweise Zu- oder Abschalten von Einzelzellen oder Stacks durch ein zugeordnetes Modulieren der übrigen Einzelzellen oder Stacks ausgeglichen. Dies bedeutet beim Ausgleichsvorgang, dass erstens aufgrund einer Schwankung durch einen Schaltvorgang weitere Einzelzellen oder Stacks kurzzeitig zu- oder abgeschaltet werden und/oder dass zweitens die Regelung gegebenenfalls kurzzeitig - und mit Vorrang gegenüber anderen Einflüssen - den momentan als optimal bestimmten Lastpunkt verlässt.

Generell kann das Brennstoffzellensystem auch entsprechend einer Temperaturmessung im Bereich der Anbindung an den thermischen Verbraucher und/oder in einer angeschlossenen Heizungsanlage geregelt werden. Es sind dann durch die erfindungsgemäßen Schaltvorgänge zum Beispiel die vorgegebenen Vorlauftemperatur-Sollwerte des Heizungssystems einzuhalten. Die im Verbund zusammmengeschalteten Einzelzellen oder Stacks besitzen vorzugsweise unterschiedliche Leistungsgrößen und -Charakteristiken. Insbesondere sind dies unterschiedliche Nennlastpunkte, hauptsächlich in Bezug auf die Stromdichte. Es ergibt sich eine große Variantenvielfalt bei der Verschaltung bzw. Kombination dieser unterschiedlichen Einzelelemente und das Brennstoffzellensystem wird damit allen Betriebszuständen gerecht.

Innerhalb des Brennstoffzellensystems sind im Verbund geschaltete Einzelzellen für sich, Einzelzellen in Stacks oder die Stacks untereinander über eine Reihen- und/oder eine Parallelschaltung miteinander verbunden. Zu- oder abschaltbar sind dabei Einzelzellen, einzelne Stacks als Gesamteinheit sowie eine beliebige Anzahl von Einzelzellen innerhalb eines Stacks. Diese Baueinheiten können bei Bedarf mit einer parallel geschalteten Brücke, nach den Vorgaben einer Regeleinrichtung, kurzgeschlossen werden. Zur Überwachung eines elektrischen Verbrauchers ist ein Netzeinspeisegerät angeschlossen, welches das Zu- oder Abschalten von Einzelzellen oder Stacks steuert.

Mit dem erfindungsgemäßen Verfahren wird der flexible Einsatz eines Brennstoffzellensystems ermöglicht. Es besitzt einen einheitlichen Aufbau und wird nur durch die Regeltechnik an die Einsatzbedingungen angepasst. Damit ist eine wirtschaftliche Serienherstellung gewährleistet.

Das Brennstoffzellensystem befindet sich immer in einem für den speziellen Anwendungsfall optimalen Lastpunkt, um einerseits günstige einerseits Wirkungsgrade sowie andererseits eine maximale Wärme- und/oder Strombereitstellung zu erreichen. Aufwändige Einstell- und Abstimmungsarbeiten können entfallen. Der für den spezielle Anwendungsfall optimale Lastpunkt wird vorzugsweise durch Versuche oder Berechnungen ermittelt und in einem Speicher des Reglers hinterlegt. Eine Definition kann dabei zum Beispiel bei der Installation der Anlage mit einzugebenden Werten für Temperaturgrenzen, Stromdichten, Wirkungsgrade, Leistungsbereiche, Zeiten, Vorrang bestimmter Verbraucher, Sicherheitsanforderungen oder Brennstoff- bzw. Stromeinspeisekosten erfolgen.

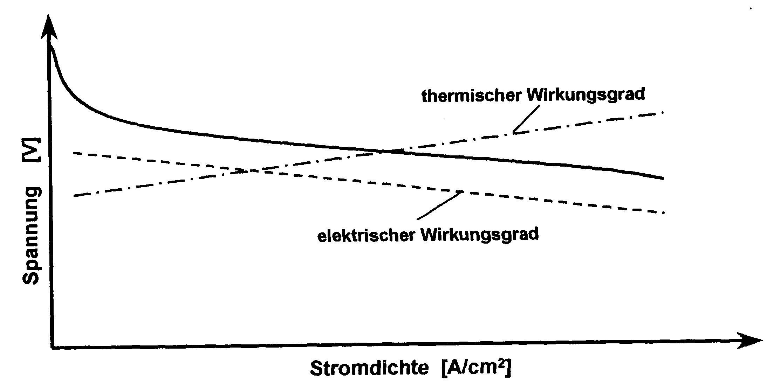

Die Zeichnung stellt ein Ausführungsbeispiel der Erfindung dar und zeigt in einer einzigen Figur das charakteristische Betriebsverhalten einer Brennstoffzelle.

Über der Stromdichte ist der Spannungsverlauf an einer Brennstoffzelle aufgetragen. Da neben dem erzeugten Strom auch noch Wärme anfällt, müssen der elektrische und der thermische Wirkungsgrad ebenfalls bei der Abstimmung auf angeschlossene Verbraucher betrachtet werden. Charakteristisch für eine Brennstoffzelle ist ein proportional zum Spannungsverlauf fallender elektrischer Wirkungsgrad. Dabei liegt jedoch das Optimum der elektrischen Leistung bei höheren Stromdichten, d. h. bereits im Bereich mit relativ geringem elektrischen Wirkungsgrad. Im Gegensatz dazu steigt der thermische Wirkungsgrad mit Zunahme der Stromdichte an.

Mit dem Verfahren zur Regelung eines Brennstoffzellensystems soll alleine durch das Zu- oder Abschalten von Einzelzellen oder Stacks oder in Kombination mit der für die Verbraucher günstigsten Stromdichte im aktuellen Lastpunkt die elektrische und/oder thermische Leistung des Brennstoffzellensystems geregelt werden. Damit wird der Betrieb des Brennstoffzellensystems den Leistungsanforderungen der angeschlossenen elektrischen und thermischen Verbraucher angepasst.

Alle in Betrieb befindlichen Einzelzellen oder Stacks werden in bzw. möglichst nahe am für die aktuell vorliegende Anforderung der Verbraucher günstigen Lastpunkt betrieben. Dieser kann in Bezug auf die optimale Ausnutzung der eingesetzten Energie oder auf die Bereitstellung der maximalen elektrischen und/oder thermischen Energie entsprechend der Bedarfsanforderung bzw. der eingegebenen Sollwerte festgelegt werden.

Wird das Brennstoffzellensystems vorrangig nach dem thermischen Verbraucher geregelt, so ist der optimale Lastpunkt für einen maximalen elektrischen Wirkungsgrad zunächst von geringerer Bedeutung. Die Regelung berücksichtigt hier allerdings festgelegte Grenzwerte, um den Betrieb in unwirtschaftlichen Lastpunkten auszuschließen. Umgekehrt kann zum Beispiel ein hoher thermischer Wirkungsgrad nicht erreicht werden, wenn die maximale elektrische Leistung zur Verfügung gestellt werden muss und die Regelung des Brennstoffzellensystems vorrangig nach den Leistungsanforderungen des elektrischen Verbrauchers arbeitet.

## Patentansprüche

1. Verfahren zur Regelung eines Brennstoffzellensystems, insbesondere bestehend aus mehreren im Verbund zusammengeschalteten Einzelzellen oder Stacks, mit mindestens einer Einrichtung zur Brennstoffaufbereitung sowie einer Anbindung an mindestens einen elektrischen und/oder thermischen Verbraucher zur Abgabe der erzeugten Energie, insbesondere zum Einsatz als Kraft-Wärme-Kopplungsanlage in Kombination mit einer Heizungsanlage und unter Vorgabe einer an die Verbraucher angepassten Stromdichte,
**dadurch gekennzeichnet, dass** alleine durch das Zu- oder Abschalten von Einzelzellen oder Stacks oder in Kombination mit der für die Verbraucher günstigsten Stromdichte im aktuellen Lastpunkt die elektrische und/oder thermische Leistung des Brennstoffzellensystems geregelt wird.

2. Verfahren nach Anspruch 1,
**dadurch gekennzeichnet, dass** das Brennstoffzellensystem in Abhängigkeit der angeschlossenen elektrischen und thermischen Verbraucher geregelt wird.

3. Verfahren nach Ansprüchen 1 und 2,
**dadurch gekennzeichnet, dass** durch das Zu- oder Abschalten von Einzelzellen oder Stacks die verbleibenden, in Betrieb befindlichen Einzelzellen oder Stacks in bzw. möglichst nahe am für die aktuell vorliegende Anforderung der Verbraucher günstigen Lastpunkt, wahlweise in Bezug auf die Ausnutzung der eingesetzten Energie oder die Bereitstellung der maximalen elektrischen und/oder thermischen Energie, betrieben werden.

4. Verfahren nach den Ansprüchen 1 bis 3,
**dadurch gekennzeichnet, dass** das Zu- oder Abschalten von Einzelzellen oder Stacks nach der Bedarfsanforderung der angeschlossenen elektrischen oder thermischen Verbraucher erfolgt und die verbleibenden, in Betrieb befindlichen Einzelzellen oder Stacks nach der jeweiligen Bedarfsanforderung in bzw. möglichst nahe am günstigsten Lastpunkt betrieben werden.

5. Verfahren nach den Ansprüchen 1 bis 4,
**dadurch gekennzeichnet, dass** bei einer Regelung des Brennstoffzellensystems nach dem thermischen Verbraucher der optimale Lastpunkt für einen maximalen elektrischen Wirkungsgrad verlassen wird, um eine entsprechend größere Wärmeleistung zur Verfügung zu stellen und dass bei einer Regelung des Brennstoffzellensystems nach dem elektrischen Verbraucher der optimale Lastpunkt für einen höchstmöglichen thermischen Wirkungsgrad verlassen wird, um eine maximale elektrische Leistung zur Verfügung zu stellen.

6. Verfahren nach den Ansprüchen 1 bis 5,
**dadurch gekennzeichnet, dass** das stufenweise Zu- oder Abschalten von Einzelzellen oder Stacks durch zugeordnetes Modulieren von verbleibenden, in Betrieb befindlichen Einzelzellen oder Stacks ausgeglichen wird.

7. Verfahren nach den Ansprüchen 1 bis 6,
**dadurch gekennzeichnet, dass** eine Temperaturmessung im Bereich der Anbindung an den thermischen Verbraucher und/oder in einer angeschlossenen Heizungsanlage erfolgt, nach der das Brennstoffzellensystem geregelt wird.

8. Verfahren nach den Ansprüchen 1 bis 7,
**dadurch gekennzeichnet, dass** die im Verbund zusammmengeschalteten Einzelzellen oder Stacks vorzugsweise unterschiedliche Leistungsgrößen und ―Charakteristiken besitzen.

9. Verfahren nach den Ansprüchen 1 bis 8,
**dadurch gekennzeichnet, dass** die im Verbund zusammmengeschalteten Einzelzellen oder Stacks vorzugsweise unterschiedliche Nennlastpunkte, insbesondere in Bezug auf die Stromdichte, besitzen.

10. Vorrichtung zur Durchführung des Verfahrens nach den Ansprüchen 1 bis 9,
**dadurch gekennzeichnet, dass** die im Verbund geschalteten Einzelzellen oder Stacks des Brennstoffzellensystems über eine Reihen- und/oder eine Parallelschaltung miteinander verbunden sind, wobei jede zu- oder abschaltbare Einzelzelle bzw. Stack mit einer parallel geschalteten Brücke kurzgeschlossen werden kann.

11. Vorrichtung zur Durchführung des Verfahrens nach den Ansprüchen 1 bis 10,
**dadurch gekennzeichnet, dass** ein Netzeinspeisegerät zur Überwachung des elektrischen Verbrauchers angeschlossen ist und das Zu- oder Abschalten von Einzelzellen oder Stacks steuert, wenn das Brennstoffzellensystems vorrangig nach der elektrischen Leistung geregelt wird.
